# EUROPEAN PATENT APPLICATION

(11) **EP 0 996 271 A2**
(43) Date of publication of application: **26.04.2000**
(21) Application number: 99308042.3
(22) Date of filing: 12.10.1999
(51) Int. Cl.: H04M 3/533

(54) **Active answering machine**

(30) Priority: 19.10.1998 US 175084
(71) Applicant: LUCENT TECHNOLOGIES INC., Murray Hill, New Jersey 07974-0636 (US)
(72) Inventor: Netravali, Arun N., New Jersey 07090 (US); Szurkowski, Edward S., New Jersey 07040 (US)
(74) Representative: Watts, Christopher Malcolm Kelway, Dr.

(57) **Abstract**

An active answering machine selectively stores and fonvards received messages. The active answering machine has a message receiving interface for receiving a message of a first type, a message storage circuit for selectively storing messages, a message transmission interface for selectively sending a message of a second type, and a controller. The controller processes the received message and dynamically determines if the received message is to be stored and/or routed.

## Description

### Field Of The Invention

The present invention relates to telecommunications, and more particularly to answering systems.

### Background Of The Invention

Advances in communications provide the ability to reach individuals with voice, text and graphical communications. However, the very advances that make it easier to communicate and exchange information, also make it easier to become lost in a maze of telephone numbers and communication formats. Home telephone numbers, business telephone numbers, cellular telephone numbers, pager numbers, alpha-numeric pager numbers, e-mail addresses, and other contact points, while allowing the exchange of voice and data (including textual, facsimile, graphical and video data), can easily overwhelm the most vigilant caller. The numerous contact points present an equally burdening task of managing and processing all of the calls, messages, voice mail, e-mail, facsimiles, and other information distributed over a large number of service providers.

Personal telephone numbers, which utilize a special "500" area code number can be programmed to delivery calls to a variety of telephone numbers, provide call screening, call sequencing and even voice mail. Essentially, a "500" area code number can function as a virtual telephone number for a caller to use, where the call will be forwarded to another telephone location, or to a service feature such as voice mail, as has been identified by the user of the personal telephone number. However, "500" area code numbers are a long distance number, which the caller must pay for, or optionally with a reverse billing feature the called party will pay for the call.

Accordingly, there is a need for a user owned and managed integrated messaging and call management system for existing communication points of contact.

### Summary Of The Invention

The present invention is an active answering machine for storing and forwarding received messages. The active answering machine has a message receiving interface for receiving a message of a first type, a message storage circuit for selectively storing messages, a message transmission interface for selectively sending a message of a second type, and a controller. The controller processes the received message and dynamically determines if the received message is to be stored and/or routed.

### Brief Description Of The Drawings

A more complete understanding of the present invention may be obtained from consideration of the following description in conjunction with the drawings in which:
FIG. 1 is a high level block diagram of a communication network with the active answering machine of the present invention;
FIG. 2 is a detailed functional block diagram active answering machine of the present invention;
FIG. 3 is an exemplary flow chart of the handling of a received voice message by the active answering machine; and
FIG. 4 is an exemplary flow chart of the query and handling of a stored message status report by the active answering machine.

### Detailed Description Of Various Illustrative Embodiments

Although the present invention is particularly well suited for use in a switched communication network, it is also well suited for use with dedicated communication networks. Advances in communications provide the ability to reach individuals with voice, text and graphical communications. Home telephone numbers, business telephone numbers, cellular telephone numbers, pager numbers, alpha-numeric pager numbers, e-mail addresses, and other contact points allow the exchange of voice and data. Typically the task of managing and processing all of the calls, messages, voice mail, e-mail, facsimiles, and other information distributed over a large number of service providers lacks integration and simplicity. With time constraints facing communication users and with new flexibility provided by telecommuting and virtual offices, ad-hoc combinations of answering machines, facsimile machines, personal computers, pagers, analog cellular telephones, and digital cellular telephones supplement the traditional POTS (plain old telephone service) device, but without providing an integrated messaging and call management system for these communication points of contact.

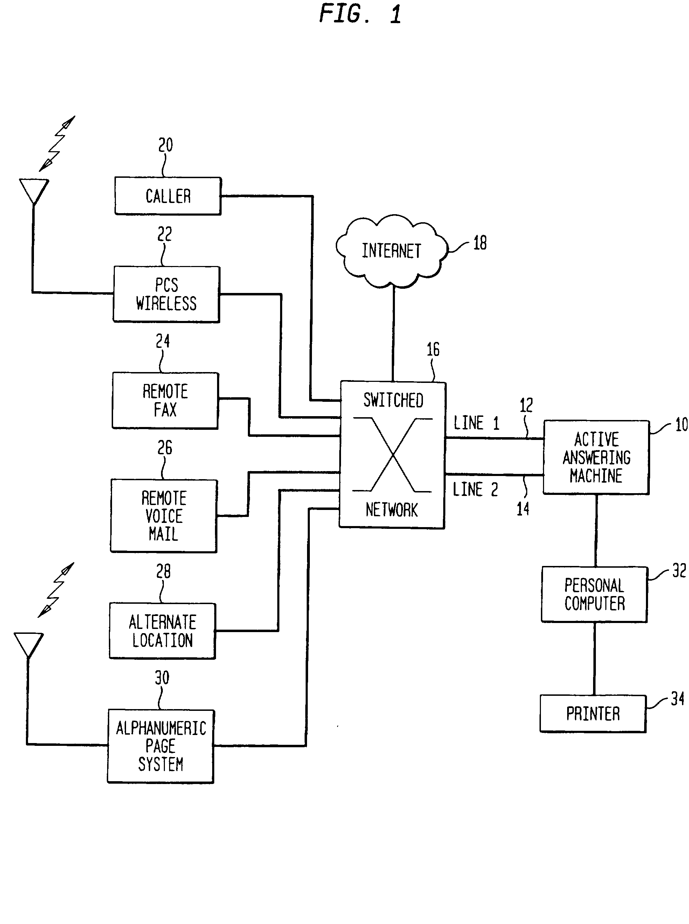

Referring to Fig. 1 there is shown a high level block diagram of a communication network with the active answering machine of the present invention. The active answering machine 10 is coupled to a switched communication network 16 through a first communication line 12 and an optional second communication line 14. The switched communication network 16 provides access to a variety of communication systems and devices including but not limited to the Internet 18, a caller using an ordinary POTS telephone 20, PCS wireless service subscriber 22, a remote facsimile machine 24, a remote voice mail system 26, alternative user location 28, alpha numeric pager system 30 and other communication systems and devices. The active answering machine 10 is optionally coupled to a personal computer (PC) 32 through a serial communication port, or other I/O access route such as a parallel port, direct bus interface, etc. The PC 32 optionally connects to a printer 34.

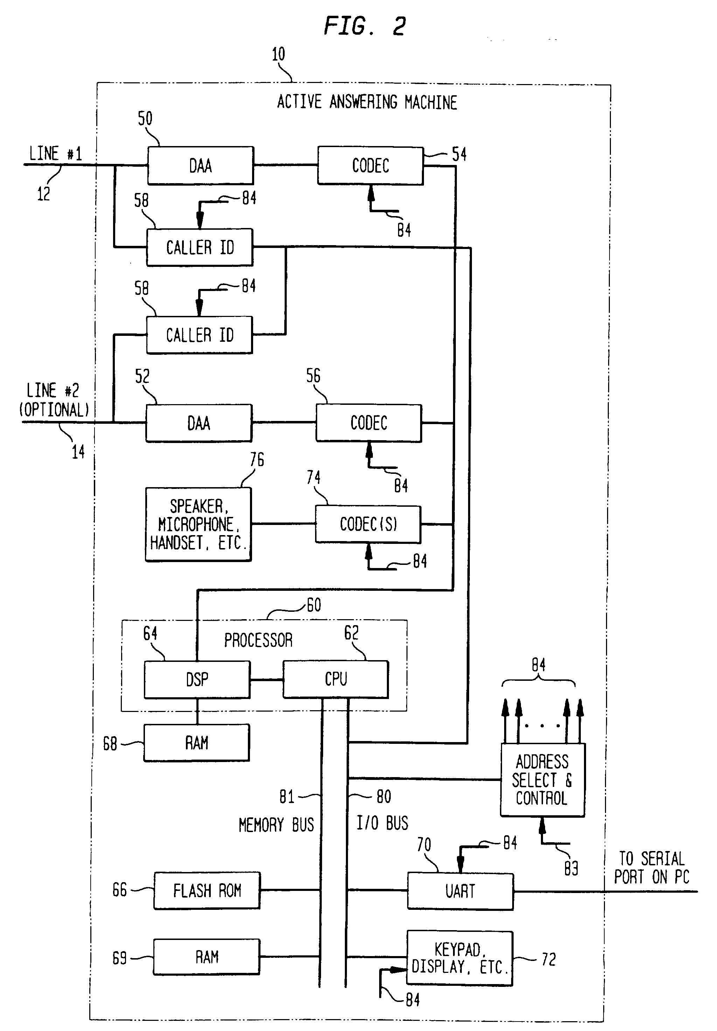

Referring to Fig. 2 there is shown a detailed functional element block diagram of the active answering machine 10. Data access arrangement (DAA) circuits 50, 52 communicate with the first communication line 12 and the second optional communication line 14. Corresponding CODEC circuits 54, 56 processes signals to/from the DAA 50, 52. These analog signals are transmitted and received over the first communication line 12 and the second optional communication line 14. The CODEC circuits 54, 56 each include (1) an analog-to-digital converter to translate received analog signals from the DDA circuits 50, 52 into digital for to be accessed via the I/O bus 80, and (2) a digital-to-analog converter to translate digital signals received via the I/O bus 80 into analog signals to be transmitted over the first communication line 12 and the second optional communication line 14 via the DAA circuits 50, 52. An address select and control circuit 83 provides circuit selection and control signals 84 to each of the devices attached to the I/O bus 80, including the CODEC circuits 54, 56, UART 70, Keypad, Display 12, Caller ID circuits 58, etc. Caller ID circuits 58 are connected to the first communication line 12 and the second optional communication line 14 to provide automatic number identification (ANI) and other information about the calling party. The number identification information and other information is communicated to a processor 60 over the I/O bus 80. The processor 60 is connected to a memory bus 81 and the I/O bus 80. The memory bus 81 and the I/O bus 80 collectively comprise the system bus. The processor 60 contains a central processing unit (CPU) 62 and a digital signal processor (DSP) 64. The processor 60 may be, for example, a combined DSP and CPU or may be separate integrated circuits. The DSP 64 portion of the processor 60 primarily performs the manipulations of voice data and modem functions, with the CPU 62 portion of the processor 60 providing primary overall system control and handling the performance of various overhead functions. The operations performed by the DSP 64 may also be performed by the CPU 62, via special instructions, adjunct co-processors or other facilities within the CPU 62.

Flash read only memory (ROM) 66 is a non-volatile type of memory coupled to the CPU 62 and holds the controlling program for the processor 60. Random access memory (RAM) 68 coupled to the DSP 64 and RAM 69 coupled to the CPU 62 provide storage for data. The UART 70 circuit is interfaced to the serial port of the PC 32 (shown in Fig. 1). An additional CODEC circuit 74 processes voice signals from the system bus for telephone I/O devices 76 including a hand-set, speaker and microphone.

In operation, the active answering machine 10 identifies and manages message objects for a user. Message objects are comprised of a message type and associated content. Message objects are identified by a message type, which includes voice, facsimile, textual, e-mail, etc. Message objects can originate from an inward call from the switched network, be created as a result of a query of an external system, or be internally generated by the processor. External systems that may be queried include remote voice mail, e-mail, and other store and forward type message systems. Internally generated messages can include information on external system message status, internal system message status, access failures, and optionally preselected reminder notices relating to an event or time. Message objects can be stored and/or routed. The caller ID 58 information, type of message object, time and date, as well as other criteria are used to determine the routing of a particular message object.

While the routing of messages that are in a compatible format does not require conversion, routing messages from one format to another format requires conversion. The conversion routines are known to those skilled in the art. Textual messages from an alpha-numeric pager, e-mail, or internal system messages can be converted to voice or facsimile. Voice messages can be converted to a textual format, or attached as audio to e-mail. When accessing a message storage system, such as e-mail, voice mail, etc. summary information is obtained and used to generate a status message object (which is a message object having the summary information as the message content), additionally part of the actual message or even the entire external message may be converted.

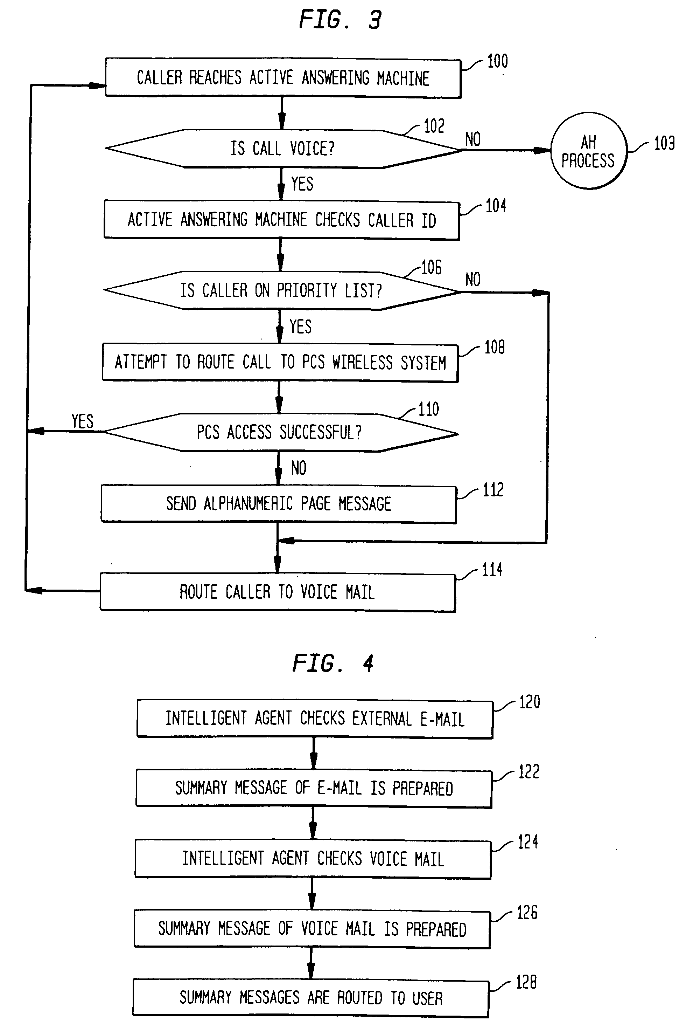

Referring to Fig. 3 there is shown a typical flow diagram for the processing of a received call in an illustrative embodiment of the active answering machine. In step 100 a caller is connected to the active answering machine 10 which answers the first communication line 12. In step 102 the active answering machine determines the type of the message object (voice, fax, data, etc.) While routing of the message object is shown for a voice call, the same or similar type of logic can be used to route fax, textual, data and other messages in alternative process flow 103. In step 104 the active answering machine checks the caller ID. The caller ID is compared to a priority list in step 106 which also considers time and date. If the caller is on the priority list, then an attempt is made in step 108 to connect the caller to the user through a wireless system such as a PCS system. The status of the wireless access is monitored in step 110. If the wireless access was not successful, then an alphanumeric page message is sent in step 112 and the caller receives a message providing a status message which is an indication of how the call has been handled. In step 114 the caller can leave a voice mail message, which is the option also presented to non-priority callers.

Referring to Fig. 4 there is shown a typical flow diagram for a message object created from e-mail and voice mail. In step 120 an intelligent agent checks external e-mail. The intelligent agent must have the capability to take actions leading to the completion of a task or objective, such as accessing and reading e-mail, without trigger or impetus from an end-user. The e-mail access including log on, command interaction and related activities are handled directly by the intelligent agent. The details of the programming of the intelligent agent are known to those skilled in the art. The functioning and design of intelligent software agents are described in "Software Agents: An Overview" by Hyacinth S. Nwana, Knowledge Engineering Review, Vol. 11, No. 3 pp 1-40, September 1996 and "Intelligent Agents: A Technology And Business Application Analysis" by Kathryn Heilmann et al., URL:
http://www-iiuf.unifr.ch/pai/users/chantem/heilmann, 1998, which are herein incorporated by reference. A summary of the e-mail information is prepared in step 122. A text to voice conversion is made. In step 124 an intelligent agent checks voice mail. A summary of the voice mail is prepared in step 126. In step 128 the summary messages in the form of a message object are routed to the user. The routing can utilize a decision tree similar to that shown in Fig. 3 where wireless access is first tried, then alphanumeric page, and finally voice mail. Alternatively, additional access options can be selected.

Table 1 shows a routing decision table and Table 2 shows the list of action choices with respect to Table 1. The active answering machine of the present invention determines and tags the type of message. The message type corresponds to the descriptions which are shown in the first column. Next, the Active Answering Machine checks the caller ID information which indicates the source of the message; this is compared to a priority list (a list of message sources to be handled in a priority fashion). If the message is from a priority source (or the message was internally generated) the Priority Routing section is used from Table 1 otherwise the Standard routing is used. Each entry of the Priority Routing and the Standard Routing decision table may be further divided based upon criteria such as the time of day and day of week (illustratively depicted as "Primary" and "Off"). This enables one predetermined response criteria to be utilized during normal working hours and an alternative response criteria to be used for off hours. The Active Answering Machine will then attempt to route the message utilizing the action choices in the order shown for the particular object type. It should of course be understood that the depicted priority choices are merely illustrative, and that a user would determine such choices based upon the user's own preferences and priorities.

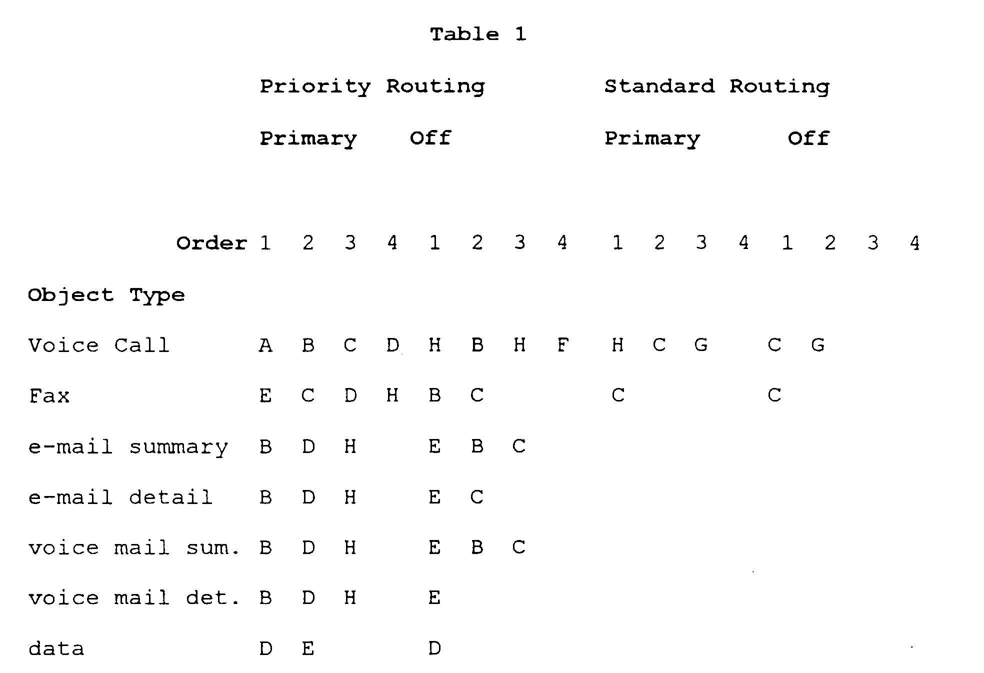

**Table 2**

| | **Action Choices** |
|---|---|
| A | Selective Ring |
| B | PCS |
| C | Leave Message |
| D | Alpha/numeric page |
| E | Outward Fax |
| F | Prompt Caller w/ 1st list of choices |
| G | Prompt Caller w/ 2nd list of choices |
| H | Alternative number |
| I | Combined Leave Message and Alpha/numeric page |

A user can selectively update the routing decision table from the PC 32, from an interactive menu, from an encrypted data message sent to the active answering machine, from the local keypad and display, or by dialing into the active answering machine from a remote telephone and using the standard DTMF keypad to input commands/selections with synthesized or prerecorded voice responses and confirmations from the active answering machine. The decision table can have simultaneous or sequential routing that is not conditional on a particular routing response. One such example, shown as response I in Table 2, would be to always send an Alpha/numeric page when a message is left.

Utilizing the second communication line, active (live) voice messages may be forwarded, to the user at a remote location. Alternatively, this forwarding function can be done utilizing a three way calling feature on a single communication line. When a call is received it can be routed through the system (made to ring through) based upon the caller ID information; the communication device ring can be selective, or a voice announcement can be made. The announcements can be routed through an intercom system or be a voice over on a TV or stereo system. Voice messages can be routed over the Internet 18 as attachments to e-mail or through Internet packet telephony. A user can access the active answering machine, review the stored messages, and selectively route or forward them.

The active answering machine 10 can provide management reports including statistics on message processing, call details, etc. The reports can be printed on a printer, sent by facsimile, or e-mail. While Fig. 3 shows the wireless service as being the priority selection, paging, Internet access, alternative voice numbers all can be prioritized based upon various predetermined criteria.

The active answering machine 10 can additionally generate messages from a database and notify the user, by pager, facsimile, voice, etc. of scheduled meetings, provide reminders about birthdays and anniversaries, etc. Essentially, the active answering machine can function as an efficient personal secretary for the user. A user can receive interactive prompts (e.g. through use of a 2-way pager) which present the user with a menu of choices.

A user can access the system as a caller and select a command mode by pressing a predetermined DTMF key sequence. The command mode allows message retrieval, configuration changes, message creation, etc. The user can also access the system features and functions for review and programming using the PC 32. Alternatively a TV interface and IR remote control including an Internet TV interface can be used. If voice, e-mail, facsimiles and other messages are sent to or generated at the active answering machine 10 they may be "pushed" to a user or group of subscribers. The active answering machine architecture will support outside developers and vendors who can provide add on features and capabilities analogous to plug in modules for a web browser.

Numerous modifications and alternative embodiments of the invention will be apparent to those skilled in the art in view of the foregoing description. Messages and message summaries can be routed as a facsimile message, pager message, and an e-mail message. Programmatic features and capabilities for the active answering machine can be downloaded periodically over the Internet. The user may also employ a programming service for programming the configurations of the active answering machine. In one embodiment, a user would access an Internet site with a browser, where the user could make configuration selections for the decision tables and other options. The Internet site would then contact the active answering machine and download the configuration data and decision tables. Accordingly, this description is to be construed as illustrative only and is for the purpose of teaching those skilled in the art the best mode of carrying out the invention. Fax mailboxes and voice mail features can be integrated into the active answering machine. The active answering machine can support ISDN lines as well as analog lines as well as removable storage media for expanded message capability and transfer options for subsequent processing.

## Claims

1. An active answering machine for dynamically receiving, storing and forwarding messages, the device comprising:
message reception interface for receiving a first message of a first type;
message storage circuit for selectively storing messages;
message transmission interface for selectively sending a second message of a second type; and
controller for dynamically processing said first message by selectively storing said first message, selectively converting said first message of said first type to said second message of said second type, and selectively routing said second message in response to a predetermined criterion, said controller coupled to said message reception interface, said message storage circuit, and said message transmission interface.

2. A communication system for selectively storing and dynamically forwarding received messages, the system comprising:
message receiving interface for receiving at a predetermined destination a first message of a first type;
message storage circuit for selectively storing messages;
message transmission interface for selectively sending a second message of a second type to an alternative destination;
controller for dynamically processing said first message by selectively storing said first message, selectively converting said first message of said first type to said second message of said second type, and selectively routing, without user interaction, said second message in response to a predetermined criterion, said controller coupled to said message reception interface, said message storage circuit, and said message transmission interface.

3. Apparatus as recited in claim 1 or claim 2 wherein said first type and said second type are the same message type.

4. Apparatus as recited in claim 1 or claim 2 wherein said selective routing occurs in real time.

5. Apparatus as recited in claim 1 or claim 2 wherein said selective routing occurs after a delay.

6. Apparatus as recited in claim 1 or claim 2 wherein said second message of said second type is a summary message.

7. Apparatus as recited in claim 1 or claim 2 wherein said first type is voice, facsimile or data.

8. Apparatus as recited in claim 1 or claim 2 wherein said second type is voice, facsimile or data.

9. Apparatus as recited in claim 1 or claim 2 wherein said predetermined criterion includes utilizing ANI data from caller ID information.

10. Apparatus as recited in claim 1 or claim 2 wherein said predetermined criterion includes time and data information.

11. Apparatus as recited in claim 1 or claim 2 wherein said predetermined criterion includes previously stored events.

12. Apparatus as recited in claim 1 or claim 2 further comprising conversion means for converting a data type message to a voice type message.

13. Apparatus as recited in claim 1 or claim 2 further comprising conversion means for converting a data type message to a facsimile type message.

14. Apparatus as recited in claim 1 or claim 2 further comprising conversion means for converting a voice type message to a data type message.

15. Apparatus as recited in claim 1 or claim 2 wherein said first message is provided by an intelligent agent which queries an e-mail system.

16. Apparatus as recited in claim 1 or claim 2 wherein said second message is provided by an intelligent agent to an e-mail system.

17. Apparatus as recited in claim 1 or claim 2 wherein said first message is provided by an intelligent agent which queries a voice mail system.

18. A method for dynamically receiving, storing and forwarding messages comprising the steps of:
receiving a first message of a first type;
storing selectively said first message;
converting selectively said first message of said first type to a second message of a second type; and,
routing selectively said second message in response to a predetermined criterion.

19. The method as recited in claim 18 wherein the step of routing occurs in real time.

20. The method as recited in claim 18 wherein the step of routing occurs after a delay.

21. The method as recited in claim 18 wherein said first message is provided by an intelligent agent querying an e-mail system.

22. The method as recited in claim 18 wherein said second message is provided by an intelligent agent to an e-mail system.

23. The method as recited in claim 18 wherein said first message is provided by an intelligent agent querying a voice mail system.

24. The method as recited in claim 18 wherein said predetermined criterion includes using ANI data from caller ID information.
